Europäisches Patentamt

European Patent Office

Office européen des brevets

(11) Numéro de publication: **0 318 121 B1**

(12) **FASCICULE DE BREVET EUROPEEN**

(45) Date de publication de fascicule du brevet: **26.01.94**    (51) Int. Cl.5: **G06F 15/70**, **H04N 7/137**

(21) Numéro de dépôt: **88202670.1**

(22) Date de dépôt: **24.11.88**

(54) **Procédé et dispositif d'estimation et de compensation de mouvement dans une séquence d'images et système de transmission d'images incluant un tel dispositif.**

(30) Priorité: **27.11.87 FR 8716477**

(43) Date de publication de la demande:
**31.05.89 Bulletin 89/22**

(45) Mention de la délivrance du brevet:
**26.01.94 Bulletin 94/04**

(84) Etats contractants désignés:
**AT BE DE FR GB IT SE**

(56) Documents cités:
**FR-A- 2 590 701**
**US-A- 4 232 338**

**IEEE TRANSACTIONS ON COMMUNICA-TIONS, vol. COM-32, no. 8, août 1984, pages 954-968, IEEE, New York, US; S. SABRI: "Movement compensated interframe prediction for NTSC color TV signals"**

(73) Titulaire: **LABORATOIRES D'ELECTRONIOUE PHILIPS**
**3, Avenue Descartes**
**F-94450 Limeil-Brévannes(FR)**
(84) Etats contractants désignés:
**FR**

(73) Titulaire: **N.V. Philips' Gloeilampenfabrieken**
**Groenewoudseweg 1**
**NL-5621 BA Eindhoven(NL)**
(84) Etats contractants désignés:
**BE DE GB IT SE AT**

(72) Inventeur: **Haghiri, Mohammad-Rèza**
**Société Civile S.P.I.D.**
**209 rue de l'Université**
**F-75007 Paris(FR)**

(74) Mandataire: **Landousy, Christian et al**
**Société Civile S.P.I.D.**
**156, Boulevard Haussmann**
**F-75008 Paris (FR)**

**Description**

La présente invention concerne un procédé d'estimation et de compensation de mouvement dans une séquence d'images dans lequel la luminosité de chaque point d'image est exprimée de façon numérique. Elle concerne également un dispositif d'estimation et de compensation de mouvement pour la mise en oeuvre de ce procédé, ainsi qu'un système de transmission d'images incluant un tel dispositif, et les étages d'émission et de réception d'un tel système. On considèrera dans la suite de la présente description que ce type d'estimation et de compensation de mouvement s'applique à un procédé de sous-échantillonnage et d'interpolation temporelle.

Une telle invention est utilisable par exemple dans le domaine de la télévision à haute définition, ainsi que dans des applications telles que la conférence à distance (encore appelée visio-conférence) ou l'enregistrement d'images. La demande de brevet français FR-A-2590701 (PHF 85-591) décrit un dispositif d'estimation de mouvement reposant sur une méthode récursive d'estimation de déplacement. Plus précisément, cette méthode prévoit d'opérer selon un critère déterminé une classification des points d'image en trois groupes dans lesquels ces points sont, avec un retard de L points, classés au fur et à mesure du balayage de l'image. Cette classification est effectuée après examen d'un arbre de classification dont les branches successives correspondent aux trois groupes possibles auxquels sont supposés appartenir L points successifs. Eventuellement, cette classification est effectuée de façon simplifiée, après examen, dans ledit arbre, d'un nombre limité déterminé de ces séquences de groupes possibles pour les L points qui suivent le point courant considéré.

Lorsqu'on veut dans une séquence d'images reconstituer une image à partir de l'image précédente, le dispositif décrit dans le document fonctionne en effet de façon satisfaisante. Le principe de fonctionnement de ce dispositif s'est cependant révélé inadapté lorsqu'on a réalisé sa mise en oeuvre en télévision à haute définition. Dans cette application, un traitement supplémentaire est en effet apparu nécessaire pour adapter au canal de transmission (le canal analogique prévu dans le cas du standard de transmission MAC-paquets appelé à remplacer les standards SECAM et PAL) la très grande quantité d'informations à transmettre. Un tel traitement peut consister, entre autres exemples, en un sous-échantillonnage spatial, qui a pour effet de supprimer régulièrement un certain nombre de points à l'intérieur d'une même image ou d'une même trame, ou en un sous-échantillonnage temporel, qui a pour effet de supprimer régulièrement un certain nombre d'images ou de trames dans une séquence d'images.

En télévision à haute définition, cette élimination périodique d'un certain nombre d'images ou de trames, par exemple d'une image sur deux, contraindrait à une reconstitution à partir de l'image de rang n-2, plus éloignée. Cette reconstitution serait possible, mais ne permettrait pas de restituer la qualité d'une image de haute définition.

Le but de l'invention est de proposer un procédé d'estimation et de compensation de mouvement dans une séquence d'images qui soit utilisable dans des applications où il faut tenir compte d'une part d'un grand nombre d'informations à transmettre dans le cas de cette application et d'autre part de caractéristiques spectrales limitées du canal de transmission disponible.

A cet effet, l'invention concerne un procédé selon lequel chaque image est divisée en blocs de I x J points, chacun de ces blocs étant défini par deux coordonnées (m,n) indiquant respectivement le rang de la ligne de l'image où se trouve le bloc et le rang du bloc sur cette m-ième ligne le point de coordonnées (m, n) étant appelé point représentatif du bloc ledit procédé comprenant les étapes suivantes :

(A) prévoir la sauvegarde de trois images successives de la séquence d'images initiale, notées respectivement par leur rang 2k, 2k + 1, 2k + 2 ;

(B) définir pour les blocs trois groupes de classification en blocs estimés par récursion horizontale corrigée, en blocs estimés par récursion horizontale non corrigée, et en blocs estimés par récursion verticale, groupes dans lesquels les blocs vont, avec un retard de L blocs, être classés au fur et à mesure du balayage de l'image, en examinant pour opérer ladite classification un nombre déterminé de séquences de groupes possibles pour les L blocs qui suivent le bloc courant X considéré, le critère de cette classification étant la différence de luminosité entre deux images de la séquence d'images compte tenu du déplacement des blocs intervenu d'une image à l'autre ;

(C) construire un arbre de classification dont les trois branches observées à chaque noeud de ramification sont en nombre égal à celui des groupes possibles et dont les $3^L$ branches observées de ce fait à chaque niveau successif 1 à L correspondent aux séquences de groupes possibles pour les L blocs successifs considérés ;

(D) associer à chaque branche de chaque niveau deux paramètres :

(a) un premier paramètre dit vecteur de déplacement, représentatif du déplacement éventuel du bloc courant de l'image 2k + 1 par rapport aux images précédente et suivante 2k et 2k + 2 et calculé pour le point représentatif dudit bloc à l'aide d'une méthode récursive d'estimation de déplacement ;

(b) un deuxième paramètre dit distorsion cumulée, représentatif de la somme cumulée de l'erreur d'approximation du bloc courant et de celles des blocs précédents en nombre L, chaque erreur d'approximation étant rendue minimale en tenant compte de l'influence d'un déplacement estimé pour un bloc sur le déplacement estimé pour les L blocs suivants, et ladite influence n'étant éventuellement examinée, parmi les $3^L$ branches possibles de l'arbre de classification, que pour M branches de plus faible distorsion cumulée dites survivantes, M étant un nombre limite inférieur au nombre maximal $3^L$ de branches ;

(E) au terme de cette procédure portant sur L blocs successifs dans le sens du balayage, prendre une décision de type majoritaire quant au groupe effectif du bloc situé par rapport au bloc courant L blocs plus tôt, ladite décision étant prise en examinant les branches survivantes et en classant ledit bloc situé L blocs plus tôt dans le groupe auquel correspond le plus grand nombre de ces branches survivantes, et ladite procédure de décision étant répétée à l'identique sauf pour les L derniers blocs pour lesquels on évite de prendre une décision majoritaire.

L'invention concerne également un dispositif de mise en oeuvre de ce procédé, un système de transmission d'images incluant un tel dispositif et les étages d'émission et de réception d'un tel système, tels que revendiqués respectivement dans les revendications 3, 6, 12, et 13

Le procédé ainsi proposé est avantageux en ce sens que l'estimation de mouvement réalisée tient compte des caractéristiques propres de la transmission en télévision à haute définition. Plus précisément, une fois la compression d'informations opérée, le procédé selon l'invention propose une méthode d'estimation par récursions dans laquelle le choix des récursions est opéré comme suit : on suppose que, d'une image à l'autre, le déplacement d'un bloc d'image est très probablement similaire à celui d'un bloc voisin spatialement, qu'il peut donc en être déduit, avec ou sans terme correctif. Simultanément, ce procédé prévoit, pour optimiser cette estimation par récursions, la minimisation de l'erreur d'estimation, à l'aide d'une classification des blocs selon ces modes de récursion, ladite classification étant effectuée à retardement pour permettre préalablement l'étude statistique de séquences de classement possible d'un certain nombre de blocs qui suivent le bloc courant et, ainsi, ne prendre effectivement une décision de classification qu'après étude de ces séquences.

Les particularités et avantages de l'invention apparaîtront maintenant de façon plus précise dans la description qui suit et dans les dessins annexés, donnés à titre d'exemples non limitatifs et dans lesquels :

- les figures 1a et 1b mettent en évidence les dispositifs essentiels inclus dans le système de transmission selon l'invention ;
- la figure 2 montre un exemple d'arbre de classification des blocs d'une image, dans lequel on opère pour chaque bloc une distinction entre son appartenance possible à un premier groupe de blocs estimés selon un mode de récursion horizontale corrigée, à un deuxième groupe de blocs estimés par récursion horizontale sans correction, ou à un troisième groupe de blocs estimés par récursion verticale ;
- la figure 3 montre quatre points $P_1$, $P_2$, $P_3$, $P_4$ sur la luminosité desquels on opère pour déterminer celle du point dit $X\text{-}DEP_i$ ;
- la figure 4 montre un exemple de réalisation d'un dispositif d'estimation et de compensation de mouvement selon l'invention ;
- les figures 5 et 6 montrent un mode de réalisation respectivement de l'estimateur récursif de déplacement et du circuit de décision à retardement du dispositif de la figure 4 ;
- la figure 7 montre un exemple de réalisation du dispositif d'estimation de mouvement prévu à la réception dans le système de transmission selon l'invention.

On supposera dans la suite de la description qu'on dispose par exemple, après prise de vues, traitement et conversion analogique-numérique, d'une séquence d'images numérisées de 1250 lignes, 1440 points par ligne, 50 hertz, format entrelacé 2 : 1, constituant les images haute définition à transmettre. Pour simplifier la terminologie dans toute la suite de la description, au lieu d'appeler image la réunion de deux trames paire et impaire d'un format entrelacé, on appellera image toute l'information spatiale disponible en association à un instant déterminé t (c'est-à-dire l'équivalent d'une trame). Chaque image est subdivisée en N blocs, comprenant chacun I x J points d'image et qui sont balayés successivement. Chacun de ces blocs est à son tour défini par les deux coordonnées (m,n) du point X représentatif de chaque bloc, m étant le rang de la ligne de l'image où se trouve ledit point et n le rang du bloc sur cette m-ième ligne.

Le procédé de traitement de la séquence d'images numérisées est le suivant. A l'émission, ladite séquence d'images est préfiltrée, afin d'enlever toutes les hautes fréquences situées hors de la bande de fréquence du sous-échantillonnage qui va suivre, puis sous-échantillonnée spatialement. Ce sous-échantillonnage spatial est par exemple celui dit en quinconce ligne et qui consiste à éliminer un point d'image sur deux sur les lignes d'une certaine parité et à éliminer de même un point sur deux, mais avec un décalage horizontal d'un point, sur les lignes de l'autre parité. Un sous-échantillonnage temporel permet d'autre part d'éliminer une image sur deux dans la séquence d'images (si la fréquence temporelle est 1/T, où T correspond à l'intervalle de temps séparant deux images successives de la séquence d'images initiale, l'intervalle de temps entre deux images après sous-échantillonnage temporel devient 2T) : les images associées par exemple à l'instant $t + (2k + 1)T$ sont éliminées, les images associées aux instants $t + 2kT$ et $t + (2k + 2)T$ étant, elles, conservées.

La séquence d'images ainsi sous-échantillonnée spatialement et temporellement est alors envoyée vers le canal de transmission (ici le canal analogique MAC), à la bande de fréquence duquel ladite séquence d'images est maintenant adaptée. Parallèlement au sous-échantillonnage temporel est réalisée après filtrage l'estimation de mouvement proprement dite, destinée à effectuer la détermination d'informations de mouvement qui, une fois transmises, permettront la reconstitution des images éliminées. Ces informations nécessaires et suffisantes pour permettre ladite reconstitution sont transmises par l'intermédiaire du canal d'assistance numérique (dit canal DATV, de l'anglais Digitally-Assisted TV) associé au canal analogique MAC.

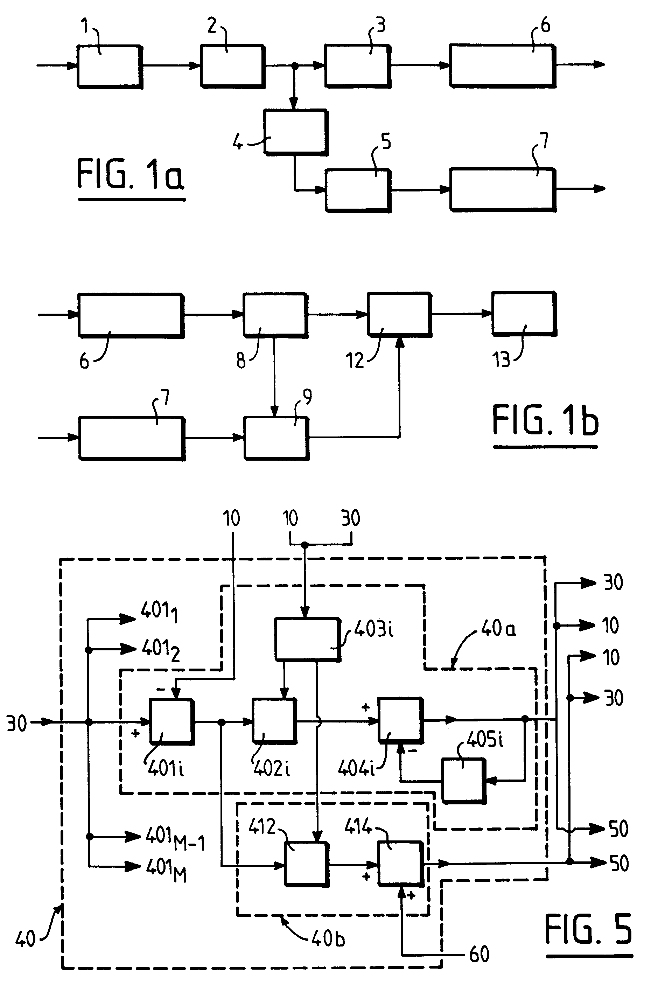

A la réception, une interpolation temporelle, précédée d'un postfiltrage des signaux transmis (c'est-à-dire d'une interpolation spatiale basée sur ces signaux) par le canal analogique et d'une nouvelle estimation de mouvement à partir d'une part des signaux résultant dudit postfiltrage et d'autre part des informations transmises par le canal d'assistance numérique permet de disposer à nouveau d'une image haute définition. L'ensemble des fonctions ainsi mentionnées est mis en évidence sur les figures 1a et 1b où sont respectivement représentés, à l'émission, des dispositifs de préfiltrage 1, de sous-échantillonnage spatial 2, de sous-échantillonnage temporel 3, de postfiltrage 4 et d'estimation de mouvement 5, ainsi que le canal analogique 6 et le canal d'assistance numérique 7, et, à la réception, en sortie de ces canaux 6 et 7, des dispositifs de postfiltrage spatial 8, d'estimation de mouvement 9 et d'interpolation temporelle 12, ainsi que le récepteur de télévision 13.

Le procédé d'estimation et de compensation de mouvement selon l'invention va maintenant être plus spécialement décrit, après avoir précisé l'objectif de ces opérations qui est de déterminer pour chaque bloc d'une image éliminée (par exemple l'image correspondant au temps $t + (2k + 1)T$, ou $(2k + 1)$ième image) un vecteur de déplacement D tel que l'on puisse obtenir une approximation de l'image éliminée à partir de la demi-somme des images non éliminées qui l'entourent (dans l'exemple choisi, à partir de la demi-somme des images 2k et 2k + 2). Dans le cas de cet exemple, cette approximation est exprimée par la relation (1) donnée en annexe, où X désigne le bloc courant considéré dans l'image 2k + 1 ou son point représentatif, D le vecteur de mouvement lorsqu'on a appliqué l'estimation de mouvement aux images (2k, 2k + 2), et B l'approximation du bloc courant de l'image (2k + 1).

Selon l'invention, au fur et à mesure du balayage des blocs de l'image, ces blocs vont être classés, avec un retard de L blocs expliqué plus loin, dans l'un des trois groupes suivants : un premier groupe de blocs dits estimés par récursion horizontale corrigée, un deuxième groupe de blocs dits estimés par récursion horizontale sans correction, et un troisième groupe de blocs dits estimés par récursion verticale. Cette classification repose sur les considérations suivantes : on peut admettre que chaque bloc courant X de l'image 2k + 1 à éliminer à l'émission et à reconstituer à la réception subit un déplacement qui est soit identique à, soit voisin de celui subi par un des blocs précédents (considérés dans le sens du balayage de ladite image). Si $D_{i+1}$ est le vecteur de déplacement du bloc courant X, trois solutions sont donc possibles :

(a) en appelant $D_i$ le vecteur de déplacement du bloc précédant spatialement le bloc courant X dans le sens du balayage, et en affectant ce vecteur $D_i$ de l'indice h pour exprimer qu'il s'agit là d'un décalage horizontal, on peut écrire la relation (2), c'est-à-dire que $D_{i+1}$ est égal au vecteur de déplacement $D_{ih}$ du bloc précédent dans la direction d'analyse des blocs, modifié par un terme correctif de déplacement $dD_{ih}$ : le mouvement du bloc est estimé par récursion horizontale, et le bloc courant appartiendrait au premier groupe de blocs si une décision quant à la classification était prise à ce moment. On a vu plus haut qu'une telle décision n'était prise qu'à retardement.

(b) la deuxième solution correspond à celle exprimée par la relation (3) où $D_{i+1}$ est égal à $D_{ih}$, sans aucun terme correctif de déplacement, et le bloc courant appartiendrait alors au deuxième groupe de blocs si là encore la décision était immédiate.

(c) la troisième possibilité est que le déplacement du bloc courant soit égal au vecteur de déplacement du bloc spatialement voisin situé à la verticale de ce bloc courant, modifié par un terme correctif de déplacement $dD_{iv}$, ce qu'exprime la relation (4) où l'indice v affecte le vecteur $D_i$ pour exprimer la position verticale dudit bloc spatialement voisin considéré.

On a vu plus haut qu'en fait chaque décision n'est prise qu'à retardement. La classification de chaque bloc dans l'un des trois groupes n'est pas effectuée immédiatement, mais seulement après avoir examiné un nombre déterminé de séquences de groupes possibles pour L blocs qui suivent le bloc considéré. De ce fait, la direction et l'amplitude du vecteur de déplacement vont être corrigées d'un bloc au suivant en fonction du groupe du bloc et de l'erreur de classification commise pour ce bloc, ou pour son point central X représentatif du bloc. Cette erreur de classification est égale à la différence de luminosité entre le point représentatif du bloc courant (image 2k + 2) et son point homologue dans l'image précédente 2k, compte tenu du déplacement effectif de ce bloc par rapport à cette image précédente.

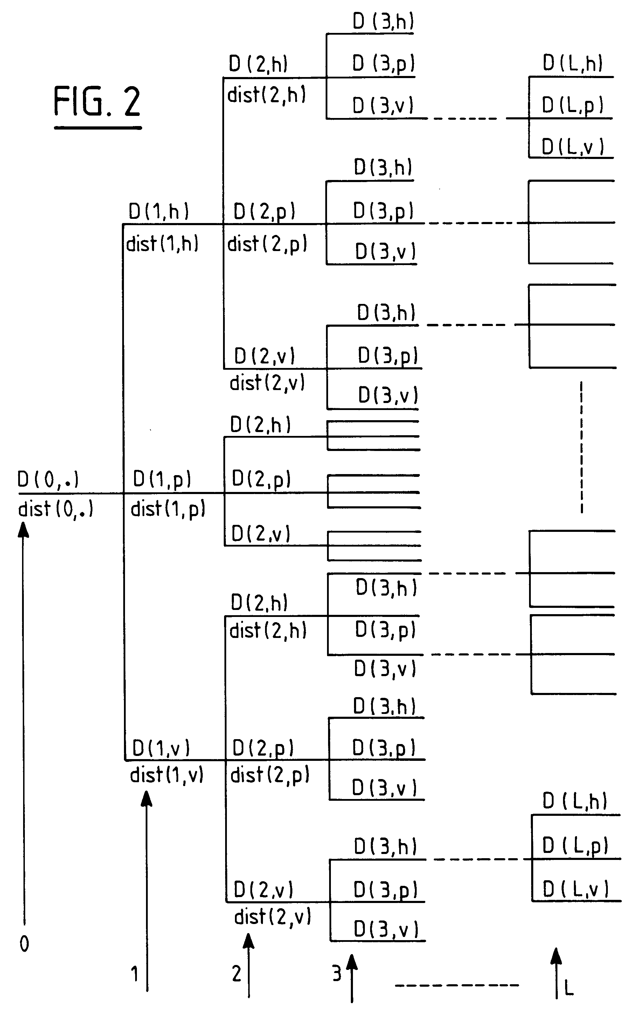

Pour définir un critère de classification, il est alors prévu de minimiser l'erreur de classification en examinant (dans une certaine limite par souci de limiter la complexité des circuits de mise en oeuvre correspondants) l'influence d'un déplacement estimé pour un bloc sur le déplacement estimé pour les L blocs suivants. Cette influence peut être observée en construisant un arbre de classification, représenté sur la figure 2 et dont les branches successives aux niveaux 1, 2,..., L correspondent aux trois groupes possibles auxquels sont supposés appartenir les L blocs successifs dans le sens du balayage. S'il y a L niveaux d'arborescence, un tel arbre comprend donc $3^L$ branches, dont éventuellement seul un nombre M dites branches survivantes sont effectivement retenues. Par exemple, à l'arrivée du deuxième bloc, trois branches sont construites dans cet arbre, puis cette procédure est répétée pour chaque branche ainsi apparue. Le nombre de branches est donc multiplié par trois à chaque niveau, du moins tant que ce nombre de branches apparues reste inférieur à une limite M. Une telle limite du nombre de branches autorisées, nettement inférieure au nombre de branches maximal possible pour un niveau d'arborescence déterminé, peut être en effet fixée, et l'est en général, afin de limiter la complexité du dispositif de mise en oeuvre du procédé. Dès que ce nombre M est dépassé même pour un niveau d'ordre inférieur à L, systématiquement on ne retient, dans la construction de l'arbre, qu'au maximum M branches, dites survivantes, les autres branches étant éliminées.

Dans l'arbre de classification représenté sur la figure 2, à chaque niveau d'arborescence et à chacune des trois branches relatives aux trois groupes sont associés deux paramètres. Le premier est le vecteur de déplacement déjà défini et noté sur la figure 2 selon son niveau d'arborescence 1 à L et selon le groupe possible (h, p, v pour le premier, le deuxième, et le troisième groupe respectivement) : par exemple D(2,h), D(3,p), etc..... Le deuxième paramètre caractéristique de chaque branche est la distorsion cumulée, également notée selon le niveau et le groupe possible : par exemple dist(1,p), dist(3,v), etc.... On appelle distorsion cumulée la somme cumulée de l'erreur d'approximation du bloc courant et de celles des blocs précédents en nombre L. L'erreur d'approximation pour un point est proportionnelle à la différence de luminosité entre ce point et son homologue dans l'image précédente, et est ici notée pour chaque point du bloc X, DFD (X,D), selon l'expression (5) où D désigne le vecteur de mouvement associé à chaque branche. Pour le bloc courant, cette erreur d'approximation est égale à la somme des carrés des erreurs DFD sur tous les points du bloc. Sur l'arbre de la figure 2, les indications de vecteur de mouvement et de distorsion cumulée n'ont pas été toutes reproduites, afin de ne pas surcharger cette figure quand les branches deviennent nombreuses.

On a vu plus haut que $D_{i+1}$, vecteur de déplacement du bloc courant X (X = point représentatif de ce bloc), était défini par l'une des relations (2),(3) ou (4) selon le groupe auquel ce bloc appartiendrait si la décision de classification était immédiate. Pour les blocs du deuxième groupe, $D_{i+1}$ est égal à $D_{ih}$ et la détermination est donc immédiate. Pour les blocs du premier et du troisième groupe, il faut évaluer $dD_{ih}$ et $dD_{iv}$ respectivement. Ces termes correctifs de déplacement dD sont proportionnels au produit du gradient (ou variation spatiale) de luminosité du point homologue du point représentatif, compte tenu du déplacement dans l'image précédente, par l'erreur d'approximation (définie ci-dessus) de l'intensité lumineuse du point central représentatif du bloc, ce qu'exprime par exemple la relation (6).

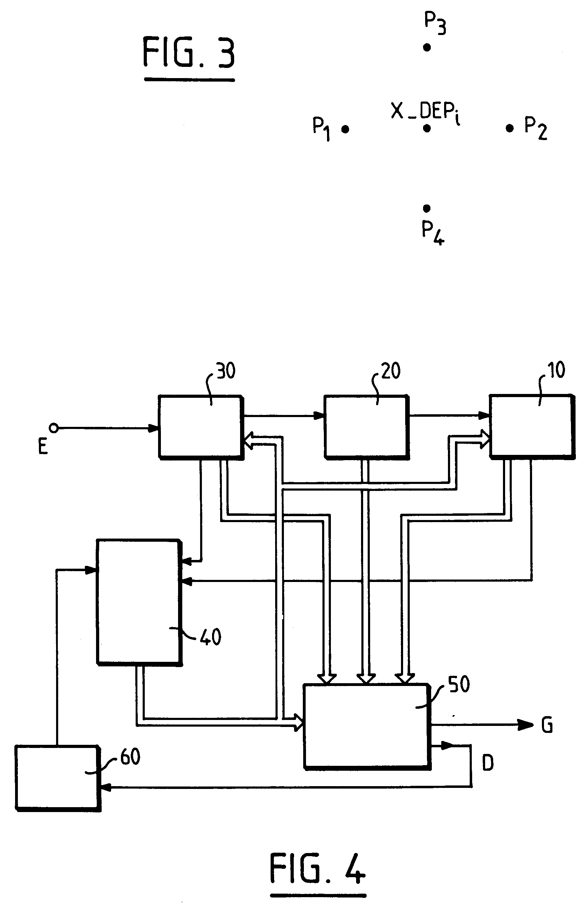

Dans cette relation, le gradient spatial de luminosité en un point, exprimé sous forme vectorielle (gradient dans la direction horizontale, gradient dans la direction verticale), opère sur la luminosité des points voisins $P_1$, $P_2$, $P_3$, $P_4$ du point homologue, noté X - $DEP_i$, de l'image précédente. La figure 3 montre ces quatre points $P_1$, $P_2$, $P_3$, $P_4$ entourant le point X-$DEP_i$, et le gradient spatial est donné par la relation (7). Dans le cas particulier de l'invention, ce gradient est, comme explicité dans la relation (8), la de-mi-somme de ceux calculés sur les images successives 2k et 2k + 2 dans le voisinage du point X-D/2 pour l'image 2k et du point X + D/2 pour l'image 2k + 2 : dans cette relation (8), Grad(X-D/2, 2k) est relatif aux points $P_1$ à $P_4$ entourant le point X-D/2 sur l'image 2k et Grad(X + D/2, 2k + 2) est relatif aux points $P_1$ à $P_4$ entourant le point X + D/2 sur l'image 2k + 2.

La procédure de construction de l'arbre est poursuivie jusqu'au L-ième bloc en associant à chaque nouvelle branche de nouveaux paramètres D(.,.) et dist(.,.). Une décision de type majoritaire est alors prise quant au groupe effectif et au vecteur de déplacement effectif du bloc précédant le bloc courant considéré de L blocs.

5

Cette décision à retardement est précédée, rappelons-le, de l'élimination de $3^L$-M branches, par élimination progressive (à chaque niveau compris entre 1 et L) de toutes celles qui sont excédentaires par rapport au nombre M, les branches survivantes étant celles de plus faible distorsion cumulée. Parmi les M branches survivantes à la fin de la construction de l'arbre de classification (ou parmi les $3^L$ branches si le nombre de niveaux est suffisamment faible pour que le nombre $3^L$ ne soit pas trop élevé et que l'élimination de branches ne soit pas réalisée), on examine à nouveau la distorsion cumulée attachée à chacune d'elles. On avait vu plus haut que l'objectif de l'estimation de mouvement était de déterminer pour chaque bloc de l'image 2k + 1 un vecteur de mouvement D permettant d'obtenir une approximation de l'image 2k + 1 à partir de la demi-somme des images 2k et 2k + 2. Cet objectif peut être formulé différemment, en considérant que l'on veut associer à chaque bloc de l'image un paramètre D tel que l'expression (9) soit minimale. Dans tous les cas, la décision à retardement est prise de la manière suivante : étant maintenant informé sur L blocs d'image supplémentaires, on examine les branches survivantes correspondantes et le premier bloc (précédant le bloc courant de L blocs) est classé dans le groupe de blocs auquel correspond le plus grand nombre de ces branches survivantes. Le vecteur de déplacement correspondant est alors considéré comme étant le vecteur de déplacement de ce premier bloc, et ainsi de suite. A partir du L-ième bloc dans le sens du balayage, le procédé permet la détermination, à l'arrivée de chaque nouveau bloc, d'un groupe (et d'un vecteur de déplacement) qui correspond au bloc précédant ce nouveau bloc de L blocs. Pour les L derniers blocs de l'image, on évite de prendre une telle décision majoritaire, et la séquence de classement minimisant la distorsion cumulée est retenue.

La figure 4 montre un exemple de réalisation d'un dispositif d'estimation et de compensation de mouvement permettant la mise en oeuvre de l'ensemble du procédé décrit précédemment. L'image d'entrée, présente sur une connexion d'entrée E sur laquelle se présentent des échantillons numériques (par exemple à une fréquence d'échantillonnage égale à 54 mégahertz dans le cas ici décrit d'une image vidéo), est envoyée vers trois mémoires d'image 10, 20, 30, placées en série pour assurer en permanence le stockage respectif de trois images successives, par exemple de rang 2k, 2k + 1, 2k + 2, de la séquence d'images. La sortie de la mémoire 10 de stockage de l'image 2k et celle de la mémoire 30 de stockage de l'image 2k + 2 sont envoyées vers un estimateur récursif de déplacement 40 effectuant les calculs des gradients et des termes de réactualisation $dD_{ih}$ et $dD_{iv}$.

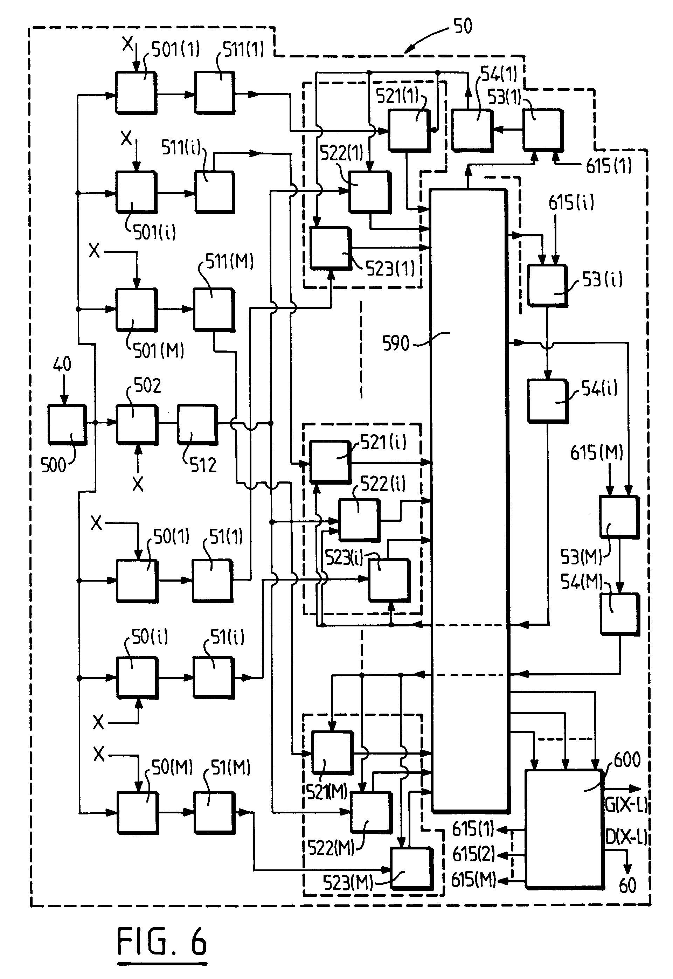

Cet estimateur 40 est composé de M étages identiques 40-A à 40-M. Chacun de ces M étages comprend lui-même une cellule 40a de calcul du nouveau déplacement suivant le mode de récursion horizontale corrigée et une cellule 40b de calcul du nouveau déplacement suivant le mode de récursion verticale. En fait, la cellule 40b est identique pour chacun des M étages et est donc, de préférence, commune à ceux-ci. On ne décrira donc, sur la figure 5 qui représente l'estimateur 40, qu'une seule cellule 40i (i variant de 1 à M), avec un indice i pour tous les éléments de circuit la concernant, et la cellule 40b commune aux M étages, sans aucun indice pour les éléments la concernant.

Sur cette figure 5, la cellule 40i représentée comprend donc un soustracteur 401i qui reçoit, sur son entrée par exemple positive, la sortie de la mémoire d'image 10 et, sur son entrée négative, la sortie de la mémoire d'image 30. Ce soustracteur délivre comme signal de sortie la différence de luminosité entre le point X représentatif du bloc courant de l'image 2k + 2 et le point homologue X-DEP$_i$ de l'image précédente 2k. Ce signal de sortie du soustracteur 401i est envoyé vers deux multiplieurs 402i et 412 qui en effectuent le produit par le gradient spatial de la luminosité au point X-DEP$_i$ (le multiplieur 402i appartenant à la i-ième cellule 40i et le multiplieur 412 à la cellule 40b commune aux M étages). Ce gradient est lui-même délivré sous forme vectorielle (gradient dans la direction m, gradient dans la direction n) par un circuit de calcul de gradient 403i qui opère sur la luminosité des points voisins $P_1$, $P_2$, $P_3$, $P_4$.

Le signal vectoriel de sortie des multiplieurs 402i et 412 est alors traité comme suit. Le signal de sortie du multiplieur 402i est reçu par un filtre récursif sans pondération permettant de mettre à jour le déplacement horizontal $D_h$. Ce filtre comprend un soustracteur 404i et un circuit de retard 405i qui est une mémoire de retard du vecteur $D_h$. Le circuit 405i reçoit la sortie du soustracteur 404i et la réintroduit, retardée, sur l'entrée négative de ce soustracteur, dont la sortie délivre le nouveau vecteur de déplacement selon le mode de récursion horizontale corrigée. Le signal de sortie du multiplieur 412 est, lui, reçu par un additionneur 414 qui reçoit également la sortie d'un circuit 60 de retard d'une ligne, au rôle précisé plus loin, et qui délivre le nouveau vecteur de déplacement selon le mode de récursion verticale.

Le dispositif d'estimation et de compensation de mouvement comprend enfin un circuit de décision à retardement 50, représenté sur la figure 6 dans un exemple préférentiel de réalisation. Ce circuit de décision comprend tout d'abord un circuit 500 d'évaluation de la demi-somme des luminosités des blocs correspondants X-DEP$_i$ et X + DEP$_i$ des images 2k et 2k + 2 respectivement. La sortie de ce circuit 500 est reliée en parallèle d'une part, pour les branches correspondant au mode de récursion horizontale corrigée, aux M entrées respectives de M soustracteurs 501(1) à 501(M), d'autre part à l'entrée d'un autre soustracteur 502 (cas du mode de récursion verticale), et enfin, pour les branches correspondant au mode de récursion horizontale sans correction, aux M entrées respectives de M autres soustracteurs 50(1) à 50-(M). Les nombres entre parenthèses (1 à M) désignent bien entendu les noeuds de l'arbre de classification.

Les valeurs ainsi obtenues selon les groupes sont élevées au carré dans (2M + 1) circuits 511(1) à 511-(M), 512, et 51(1) à 51(M) et moyennées pour tous les points du bloc, et les sorties de ces circuits sont envoyées vers 3M accumulateurs permettant d'obtenir la somme des erreurs de classification pour tous les points d'image qui forment le bloc courant. Les autres éléments du circuit de décision à retardement 50 sont rigoureusement identiques à ceux décrits sur la figure 5 de la demande de brevet FR-A-2590701 déjà citée et portent en conséquence les mêmes références numériques. On notera cependant que le circuit 600 de sauvegarde et de mise à jour de l'arbre de classification délivre, pour chaque bloc (X-L) précédant le bloc courant de L blocs, une information de groupe G(X-L) (c'est-à-dire l'indication du groupe dans lequel est classé en définitive ce bloc (X-L)) et une information de vecteur de déplacement correspondant D(X-L), mais que, dans le cas décrit sur la figure 4, seule l'information de groupe est transmise,par le canal d'assistance numérique. Les vecteurs D(X-L) sont mémorisés dans le circuit 60 (circuit de retard d'une ligne) qui les renvoie à l'estimateur 40 après un retard d'une ligne.

A la réception sont donc disponibles d'une part, en sortie du canal analogique 6, les signaux sous-échantillonnés spatialement et temporellement dans les dispositifs 2 et 3 respectivement, et d'autre part, en sortie du canal d'assistance numérique 7, le groupe de classification des blocs. Les signaux de sortie du canal analogique 6 sont reçus par le dispositif de postfiltrage 8, dont les signaux de sortie sont à leur tour reçus d'une part par le dispositif d'estimation de mouvement 9 et d'autre part par le dispositif d'interpolation temporelle 12.

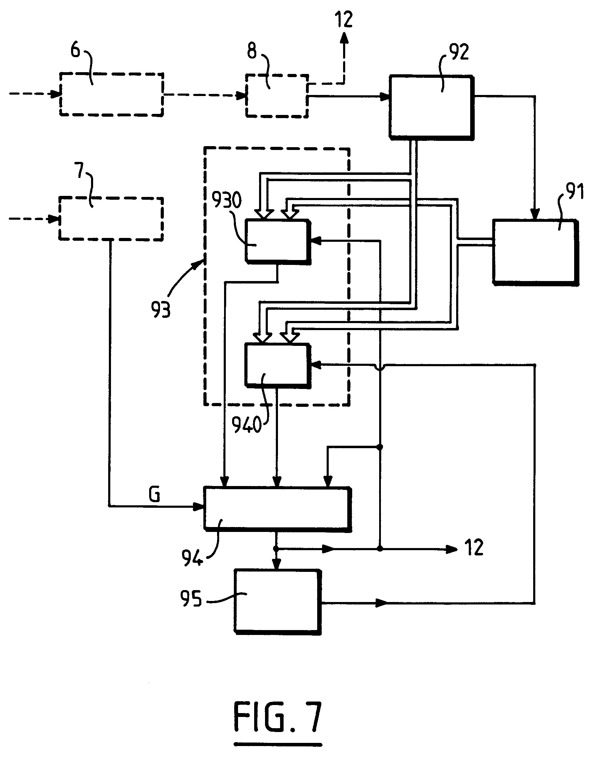

La figure 7 montre un exemple de réalisation du dispositif d'estimation de mouvement 9 à la réception. Ce dispositif 9 comprend d'abord deux mémoires d'image 91 et 92 placées en série en sortie du dispositif de postfiltrage 8 et qui stockent deux images successives transmises par le canal analogique. La sortie de chacune de ces mémoires 91 et 92 est fournie à un circuit 93 de calcul de déplacement qui reçoit d'une part ces deux sorties de mémoire mais également les vecteurs de déplacement $D_1$ du bloc précédent dans le sens du balayage et $D_2$ du bloc spatialement voisin situé sur la ligne précédente, et qui est destiné à délivrer les trois valeurs de vecteur de déplacement correspondant aux trois modes de récursion (récursion horizontale corrigée, récursion horizontale sans correction, récursion verticale).

Le circuit 93 de calcul de déplacement comprend à cet effet deux cellules 930 et 940 de même nature que celles prévues dans l'estimateur 40 à l'émission, en ce sens que la cellule 930 par exemple (ou 940) comprend un soustracteur qui reçoit sur une entrée la sortie d'une des mémoires 91 et 92 et sur l'autre la sortie de l'autre mémoire 92 ou 91,et dont la sortie est envoyée vers un multiplieur vectoriel. Ce multiplieur vectoriel reçoit par ailleurs le signal vectoriel de sortie d'un circuit de calcul de gradient recevant lui aussi la sortie des mémoires d'image 91 et 92. Le signal vectoriel de sortie du multiplieur vectoriel est traité ensuite non plus comme dans l'estimateur 40 par deux filtres récursifs sans pondération, mais par deux additionneurs dont la deuxième entrée est précisée plus loin.

Les trois valeurs de vecteur de déplacement correspondant aux trois modes de récursion possibles sont alors envoyées vers un multiplexeur 94 qui, en fonction du groupe G(X-L) transmis par le canal d'assistance numérique 7, sélectionne pour chaque bloc celui des vecteurs de déplacement qui correspond à ce groupe et l'envoie vers le dispositif d'interpolation temporelle 12 qui effectue la demi-somme de deux images adjacentes en tenant compte des déplacements. Ce vecteur de déplacement est, par ailleurs, d'une part fourni à une mémoire de ligne 95 qui le renvoie retardé d'une ligne vers la deuxième entrée dudit additionneur de la cellule 940 de calcul de déplacement du circuit 93, et d'autre part renvoyé directement vers la deuxième entrée dudit additionneur de la cellule 930 de ce circuit 93. La cellule 930 délivre alors soit directement cette valeur de vecteur de déplacement, dans le cas du mode de récursion horizontale sans correction (le vecteur de déplacement est le même que celui du bloc précédent), soit cette valeur de vecteur de déplacement augmentée de $dD_{ih}$, dans le cas du mode de récursion horizontale corrigée. La cellule 940 délivre, dans le cas du mode de récursion verticale, la valeur renvoyée par la mémoire de ligne 95, augmentée de $dD_{iv}$.

Bien entendu, la présente invention n'est pas limitée à l'exemple de réalisation ci-desus décrit et représenté, à partir duquel des compléments et variantes peuvent être proposés sans pour cela sortir du cadre de l'invention.

On notera en particulier que l'invention concerne non seulement le dispositif d'estimation et de compensation de mouvement à l'émission qui vient d'être décrit, ainsi que le dispositif d'estimation et de compensation de mouvement à la réception qui lui correspond, mais encore un système de transmission d'images de télévision à haute définition incluant de tels dispositifs. Plus précisément, l'invention concerne un tel système lorsque celui-ci est destiné à la transmission de séquences d'images par l'intermédiaire d'un canal analogique à bande passante limitée impliquant un traitement de réduction de la quantité d'informations à transmettre, en vue de l'adaptation de ces informations à la bande du canal. Une telle adaptation peut être réalisée essentiellement par une suppression spatiale ou par une suppression temporelle d'informations, ce qui est réalisé, dans l'exemple de réalisation décrit, à l'aide des dispositifs de sous-échantillonnage spatial 2 et de sous-échantillonnage temporel 3.

L'invention s'étend aussi à tout étage d'émission qui, dans un tel système de transmission, comporte la structure décrite et comprend en particulier un dispositif d'estimation et de compensation de mouvement conforme à la réalisation préférentielle proposée plus haut, ainsi qu'à tout étage de réception correspondant. Un tel étage de réception comprend, on l'a vu, entre les dispositifs de postfiltrage spatial 8 et d'interpolation temporelle 12, le dispositif d'estimation de mouvement 9 tel que décrit précédemment.

Dans le système de transmission qui a été décrit jusqu'à présent, la sortie du dispositif d'estimation et de compensation de mouvement est constituée par une information de groupe à transmettre à l'étage de réception par l'intermédiaire du canal d'assistance numérique. Cet étage de réception comprend alors, bien entendu, le dispositif d'estimation de mouvement 9. Cependant, si l'on veut simplifier l'étage de réception, on peut supprimer ce dispositif 9. En opérant ainsi, on réduit à la réception la sensibilité au bruit de transmission. L'information transmise par le canal d'assistance numérique n'est plus alors le groupe de classification des blocs, mais le vecteur de déplacement finalement retenu pour chacun desdits blocs, et cette information de vecteur de déplacement est envoyée directement sur le dispositif d'interpolation temporelle 12 la connexion relant les dispositifs 8 et 9 n'ayant plus lieu d'être. L'invention concerne donc et l'étage d'émission ainsi modifié, et l'étage de réception simplifié qui en résulte, et le système de transmission qui inclut de tels étages d'émission et de réception.

Dans cette variante de réalisation, la quantité de données que doit transmettre le canal d'assistance numérique peut devenir supérieure au débit maximal de ce canal. Il est avantageux, alors, de prévoir un codage de ces vecteurs de mouvement à transmettre, en vue d'une réduction du débit. De nombreux circuits de codage à cette fin existent et ne seront donc pas décrits plus en détail ici. Le seul critère à retenir pour le choix de ce circuit est de parvenir à la compatibilité entre le débit nécessaire à la transmission des vecteurs de çouvement et la capacité du canal d'assistance numérique.

-ANNEXE-

$$(1) \quad \hat{B}(X, 2k+1) \approx \frac{B(X-D/2, 2k) + B(X+D/2, 2k+2)}{2}$$

$$(2) \quad D_{i+1} = D_{ih} + dD_{ih}$$

$$(3) \quad D_{i+1} = D_{ih}$$

$$(4) \quad D_{i+1} = D_{iv} + dD_{iv}$$

$$(5) \quad DFD(X,D) = B(X,2k+1) - \hat{B}(X,2k+1)$$

$$(6) \quad \overline{dD_{ih}} = \overline{Grad(X,D_{ih})} * DFD(X,D_{ih})$$

$$(7) \quad \dot{Grad}(X-DEP_i) = \frac{1}{2} \begin{bmatrix} A-B \\ C-D \end{bmatrix}$$

$$(8) \quad Grad(X,D) = [Grad(X-D/2, 2k) + Grad(X+D/2, 2k+2)] / 2$$

$$(9) \quad \sum_{blocs} [B(X, 2k+1) - \hat{B}(X, 2k+1)]^2$$

**Revendications**

1.  Procédé d'estimation et de compensation de mouvement dans une séquence d'images dans lequel la luminosité de chaque point d'image est exprimée de façon numérique, chaque image étant divisée en blocs de I x J points, chacun de ces blocs étant défini par deux coordonnées (m,n) indiquant respectivement le rang de la ligne de l'image où se trouve le bloc et le rang du bloc sur cette m-ième ligne le point de coordonnées (m,n) étant appelé point représentatif du bloc, ledit procédé comprenant les étapes suivantes :

    (A) prévoir la sauvegarde de trois images successives de la séquence d'images initiale, notées respectivement par leur rang 2k, 2k + 1, 2k + 2 ;

    (B) définir pour les blocs trois groupes de classification en blocs estimés par récursion horizontale corrigée, en blocs estimés par récursion horizontale non corrigée, et en blocs estimés par récursion verticale, groupes dans lesquels les blocs vont, avec un retard de L blocs, être classés au fur et à mesure du balayage de l'image, en examinant pour opérer ladite classification un nombre déterminé de séquences de groupes possibles pour les L blocs qui suivent le bloc courant X considéré, le critère de cette classification étant la différence de luminosité entre deux images de la séquence d'images compte tenu du déplacement des blocs intervenu d'une image à l'autre :

    (C) construire un arbre de classification dont les trois branches observées à chaque noeud de ramification sont en nombre égal à celui des groupes possibles et dont les $3^L$ branches observées de ce fait à chaque niveau successif 1 à L correspondent aux séquences de groupes possibles pour les L blocs successifs considérés ;

    (D) associer à chaque branche de chaque niveau deux paramètres :

(a) un premier paramètre dit vecteur de déplacement, représentatif du déplacement éventuel du bloc courant de l'image 2k + 1 par rapport aux images précédente et suivante 2k et 2k + 2 et calculé pour le point représentatif dudit bloc à l'aide d'une méthode récursive d'estimation de déplacement ;

(b) un deuxième paramètre dit distorsion cumulée, représentatif de la somme cumulée de l'erreur d'approximation du bloc courant et de celles des blocs précédents en nombre L, chaque erreur d'approximation étant rendue minimale en tenant compte de l'influence d'un déplacement estimé pour un bloc sur le déplacement estimé pour les L blocs suivants, et ladite influence n'étant éventuellement examinée, parmi les $3^L$ branches possibles de l'arbre de classification, que pour M branches de plus faible distorsion cumulée dites survivantes, M étant un nombre limite inférieur au nombre maximal $3^L$ de branches ;

(E) au terme de cette procédure portant sur L blocs successifs dans le sens du balayage, prendre une décision de type majoritaire quant au groupe effectif du bloc situé par rapport au bloc courant L blocs plus tôt, ladite décision étant prise en examinant les branches survivantes et en classant ledit bloc situé L blocs plus tôt dans le groupe auquel correspond le plus grand nombre de ces branches survivantes, et ladite procédure de décision étant répétée à l'identique sauf pour les L derniers blocs pour lesquels on évite de prendre une décision majoritaire.

2. Procédé d'estimation et de compensation de mouvement selon la revendication 1, caractérisé en ce que, le nombre L étant choisi égal à 0, il comprend les étapes suivantes :

(A) prévoir la sauvegarde de trois images successives de la séquence d'images initiale, notées respectivement par leur rang 2k, 2k + 1, 2k + 2 ;

(B) associer à chaque bloc deux paramètres :

(a) un premier paramètre dit vecteur de déplacement, représentatif du déplacement éventuel du bloc courant de l'image 2k + 1 par rapport aux images précédente et suivante 2k et 2k + 2 et calculé pour le point représentatif dudit bloc ;

(b) un deuxième paramètre dit distorsion locale, représentatif de l'erreur d'approximation du bloc courant ;

(C) définir pour les blocs trois groupes de classification en blocs estimés par récursion horizontale corrigée, en blocs estimés par récursion horizontale non corrigée, et en blocs estimés par récursion verticale, groupes dans lesquels les blocs vont être classés au fur et à mesure du balayage de l'image, en examinant pour opérer ladite classification, ladite erreur d'approximation, qui doit être rendue minimale ;

(D) au terme de cette procédure prendre après cet examen de la distorsion locale une décision quant au groupe effectif du bloc courant.

3. Dispositif d'estimation et de compensation de mouvement dans une séquence d'images, prévu pour la mise en oeuvre du procédé selon l'une des revendications 1 et 2 chaque image étant divisée en blocs, ces blocs devant être, selon la valeur de la différence de luminosité entre deux images de la séquence et compte tenu du déplacement des blocs intervenu d'une image à l'autre, répartis en trois groupes de classification pour permettre la construction d'un arbre de classification dont les $3^L$ branches observées à chaque niveau successif 1 à L correspondent aux séquences de groupes possibles pour L blocs successifs considérés après le bloc courant X, ledit dispositif comprenant :

(A) des première, deuxième et troisième mémoires d'image (10, 20, 30) placées en série et prévues pour assurer en permanence la sauvegarde de trois images successives de la séquence d'images initiale, notées respectivement par leur rang 2k, 2k + 1, 2k + 2 ;

(B) un estimateur récursif de déplacement (40), recevant la sortie desdites première et troisième mémoires, et un circuit de décision à retardement (50), recevant d'une part la sortie desdites première, deuxième et troisième mémoires et d'autre part celle dudit estimateur, lesdits estimateur récursif et circuit de décision étant prévus pour associer à chaque branche de chaque niveau d'une part le vecteur de déplacement représentatif du déplacement du bloc courant de l'image 2k + 1 par rapport aux blocs correspondants des images précédente et suivante 2k et 2k + 2 et d'autre part une distorsion cumulée représentative de la somme cumulée des erreurs d'approximation du bloc courant et des L blocs précédents, et pour permettre à chaque extension de l'arbre de classification l'actualisation des vecteurs de déplacement et définir, à partir de ladite actualisation et des sorties des mémoires d'image, l'information du groupe dans lequel est classé ledit bloc précédant le bloc courant de L blocs et l'information de vecteur de déplacement correspondant.

**4.** Dispositif selon la revendication 3, caractérisé en ce que l'estimateur récursif de déplacement (40) comprend M étages (40-A, 40-B, ..., 40-M) identiques comprenant eux-mêmes chacun une cellule (40a) de calcul du nouveau déplacement suivant le mode de récursion horizontale corrigée et une cellule (40b) de calcul du nouveau déplacement suivant le mode de récursion verticale.

**5.** Dispositif selon la revendication 4, caractérisé en ce que le circuit de décision à retardement comprend :

(A) un circuit (500) d'évaluation de la demi-somme des luminosités des blocs correspondants X-$DEP_{i}$ et $x +$ $DEP_i$ des images 2k et 2k + 2 respectivement ;

(B) en parallèle sur la sortie de ce circuit, (2M + 1) soustracteurs (501(1), 501(2),..., 501(M), 502, 50-(1), 50(2), ..., 50(M)) correspondant respectivement aux M branches associées au mode de récursion horizontale corrigée, à la branche correspondant au mode de récursion verticale, et aux M branches correspondant au mode de récursion horizontale sans correction, suivis en série de (2M + 1) circuits d'élévation au carré ;

(C) 3M additionneurs dont les signaux de sortie représentent les distorsions cumulées des branches de l'arbre de classification ;

(D) un circuit de tri desdits 3M signaux de sortie ;

(E) un circuit (600) de sauvegarde et de mise à jour de l'arbre de classification.

**6.** Système de transmission d'images par l'intermédiaire d'un canal à bande passante limitée impliquant un traitement de réduction de la quantité d'informations à transmettre en vue de l'adaptation de celles-ci à ladite bande, ledit système comprenant au moins un étage d'émission et un étage de réception, l'étage d'émission comprenant lui-même un dispositif d'estimation et de compensation de mouvement selon l'une des revendications 3 à 5.

**7.** Système selon la revendication 6, dans lequel lesdits étages d'émission et de réception comprennent eux-mêmes respectivement au moins un dispositif de sous-échantillonnage spatial (2) et un dispositif de sous-échantillonnage temporel (3) et au moins un dispositif de postfiltrage spatial (8) et un dispositif d'interpolation temporelle (12), ledit système étant caractérisé en ce que la sortie du dispositif d'estimation et de compensation de mouvement, constituée par l'information du groupe dans lequel est finalement classé le bloc précédant le bloc courant de L blocs, est reliée à un canal (7) dit d'assistance numérique assurant la transmission de ladite information de groupe.

**8.** Système de transmission selon la revendication 7, caractérisé en ce que l'étage de réception comprend, en parallèle sur la liaison entre les dispositifs de postfiltrage spatial et d'interpolation temporelle, un dispositif (9) d'estimation de mouvement également relié à la sortie dudit canal d'assistance numérique, ledit dispositif d'estimation de mouvement comprenant lui-même des première et deuxième mémoires d'image (91, 92) placées en série en sortie du dispositif de postfiltrage spatial, un circuit (93) de calcul de déplacement recevant les sorties de chacune des deux mémoires d'image et destiné à délivrer les trois vecteurs de déplacement correspondant respectivement aux premier, deuxième et troisième modes de récursion dits de récursion horizontale corrigée, de récursion horizontale sans correction et de récursion verticale, et un multiplexeur (94) ou circuit d'aiguillage destiné à sélectionner pour chaque bloc celui des vecteurs de déplacement qui correspond à l'information de sortie du canal d'assistance numérique et à envoyer ledit vecteur vers le dispositif d'interpolation temporelle.

**9.** Système selon la revendication 6, dans lequel lesdits étages d'émission et de réception comprennent eux-mêmes respectivement au moins un dispositif de sous-échantillonnage spatial (2) et un dispositif de sous-échantillonnage temporel (3) et au moins un dispositif de postfiltrage spatial (8) et un dispositif d'interpolation temporelle (12), ledit système étant caractérisé en ce que la sortie du dispositif d'estimation et de compensation de mouvement, constituée par l'information dudit vecteur de déplacement finalement retenu après décision, est reliée à un canal (7) dit d'assistance numérique assurant la transmission de ladite information de vecteur de déplacement.

**10.** Système de transmission selon la revendication 9, caractérisé en ce qu'un circuit de codage en vue d'une réduction du débit des données constituant l'information à transmettre est inséré dans l'étage d'émission, entre la sortie dudit dispositif d'estimation et de compensation de mouvement et l'entrée du canal d'assistance numérique (7).

**11.** Système de transmission selon l'une des revendications 9 et 10, caractérisé en ce que, dans l'étage de réception, le dispositif d'interpolation temporelle (12) reçoit directement l'information de sortie du canal d'assistance numérique, constituée par le vecteur de déplacement finalement retenu.

**12.** Etage d'émission pour un système selon l'une quelconque des revendications 6 à 11.

**13.** Etage de réception pour un système selon l'une quelconque des revendications 6 à 11.

**Claims**

**1.** A method of estimating and compensating motion in a sequence of pictures in which the brightness of each picture element is expressed digitally, each picture being divided into blocks of I x J elements, each of these blocks being defined by two coordinates (m, n) which denote the rank of the picture line in which the block is located and the position of the block in this $m^{th}$ line, respectively, the point of coordinates (m, n) being referred to as the point representative of the block, said method comprising the following steps:

(A) preserving three consecutive pictures in the sequence of initial pictures, denoted by the respective ranks 2k, 2k + 1, 2k + 2;

(B) defining for the blocks three groups in which they are classified in blocks which are estimated by corrected horizontal recursion, in blocks which are estimated by non-corrected horizontal recursion and in blocks which are estimated by vertical recursion, in which groups the blocks will be classified, with a delay of L blocks, in accordance with the progressing picture scan, by examining, to effect said classification, a predetermined number of sequences of possible groups for the L blocks subsequent to the considered current block X, the criterion on which this classification is based being the difference in brightness between two pictures in the sequence of pictures, taking the displacement of the blocks which occurs between one picture and another into account;

(C) forming a classifying tree whose three branches seen at each branching point are equal in number to those of the possible groups and whose $3^L$ branches occurring as a result thereof at each successive level 1 to L correspond to the sequences of possible groups for the L consecutive considered blocks;

(D) assigning two parameters to each branch of each level:

a) a first parameter, the displacement vector, which is representative of any displacement of the current block of the picture 2k + 1 relative to the preceding and subsequent pictures 2k ad 2k + 2 and is calculated for the element which is representative of said block with the aid of a recursive displacement estimation method;

b) a second parameter, the accumulated distortion parameter, which is representative of the accumulated sum of the approximation error of the current block and those of the preceding blocks in the number L of blocks, each approximation error being rendered minimal by taking into account the influence of an estimated displacement for a block on the displacement estimated for the L subsequent blocks, and said influence possibly not being investigated, among the $3^L$ possible branches of the classifying tree, with the exception of M branches of the weakest accumulated distortion, referred to as surviving branches, M being a limited number less than the maximum number of branches $3^L$;

(E) taking, at the end of this method, as regards L consecutive blocks in the scanning direction, a majority decision as regards the effective group of the block which, relative to the current block, is located L blocks earlier, said decision being taken by examining the surviving branches and by classifying said blocks situated L blocks earlier in the group to which the majority of surviving branches corresponds, and said decision procedure being repeated in an identical manner with the exception of the L last blocks for which no majority decision is taken.

**2.** A method of estimating and compensating motion as claimed in Claim 1, characterized in that, the number L being chosen equal to 0, it comprises the following steps:

(a) preserving three consecutive pictures in the initial sequence of pictures, denoted by the respective ranks 2k, 2k + 1, 2k + 2;

(B) assigning two parameters to each block:

(a) a first parameter, the displacement vector, which is representative of the possible displacement of the current block of the image 2k + 1 relative to the preceding and subsequent pictures 2k and 2k + 2 and calculated for the element representative of said block;

(b) a second parameter, the local distortion parameter, which is representative of the approximation error of the current block;

(C) defining for the blocks three groups in which they are classified in blocks which are estimated by corrected horizontal recursion, in blocks estimated by a non-corrected horizontal recursion, and in blocks estimated by vertical recursion, in which groups the blocks will be classified during the progressing picture scan, by examining, to effect said classification, said approximation error which must be rendered minimal;

(D) taking, in accordance with this method, after said examination of the local distortion, a decision as regards the effective group of the current block.

3. An arrangement for estimating and compensating motion in a sequence of pictures, provided for putting the method as claimed in any one of Claims 1 and 2 into effect, each picture being divided into blocks which, in accordance with the difference in brightness between two pictures of the sequence and taking the displacement of the blocks which occurs between one picture and another into account, are divided into three classification groups for forming a classifying tree whose $3^L$ branches at each successive level 1 to L correspond to the sequences of possible groups for the L successive blocks considered after the current block X, said arrangement comprising:

(A) first, second and third picture stores (10, 20, 30) arranged in series to ensure the permanent storage of the three respective consecutive pictures denoted by their respective rank 2k, 2k + 1, 2k + 2 in the initial sequence of pictures,

(B) a recursive displacement estimator (40) which receives the output signals of said first and third picture stores and a delayed-decision circuit (50) receiving the output signals of said first, second and third stores and that of said estimator, said recursive estimator ad decision circuit being arranged to associate with each branch of each level the displacement vector which is representative of the displacement of the current block of the picture 2k + 1 relative to the corresponding blocks of the preceding and subsequent pictures 2k and 2k + 2, and an accumulated distortion which is representative of the accumulated sum of the approximation errors of the current block and of the preceding L blocks, and to update at each extension of the classifying tree the displacement vectors and to define, on the basis of said updating information and the output signals of said picture stores the information of the group in which said block preceding the current block of L blocks is classified ad the information on the corresponding displacement vector.

4. An arrangement as claimed in Claim 3, characterized in that the recursive displacement estimator (40) comprises M identical stages (40-A, 40-B, ... 40-M) which themselves each comprise a cell (40a) for calculating the new displacement in accordance with the corrected horizontal recursion mode and a cell (40b) for calculating the new displacement in accordance with the vertical recursion mode.

5. An arrangement as claimed in Claim 4, characterized in that the delayed-decision circuit comprises:

(A) a circuit (500) for evaluating half the sum of the brightnesses of the corresponding blocks $X-DEP_i$ and $X + DEP_i$ of the respective pictures 2k and 2k + 2;

(B) arranged in parallel with the output of this circuit, (2M + 1) subtrackers (501(1), 501(2), ... 501(M), 502, 50(1), 50(2), ... 50(M)) corresponding to the respective M branches associated with the corrected horizontal recursion mode, with the branch corresponding to the vertical recursion mode, and corresponding to the M branches which correspond to the horizontal recursion mode without correction, followed by the series arrangement of (2M + 1) squaring circuits;

(C) 3M adders whose output signals represent the accumulated distortions of the branches of the classifying tree;

(D) a selection circuit for said 3M output signals;

(E) a circuit (600) for preserving and updating the classifying tree.

6. A picture transmission system using a channel having a limited passband which implies a compression procedure for the quantity of information components to be transmitted with a view to their adaptation to said band, said system comprising at least one transmission stage and a receiving stage, the transmission stage including an arrangement for estimating and compensating motion as claimed in any one of Claims 3 to 5.

7. A system as claimed in Claim 6, in which said transmission and receiving stages comprise at least one spatial sub-sampling arrangement (2) and a temporal sub-sampling arrangement (3), respectively, and

EP 0 318 121 B1

at least a spatial post-filtering arrangement (8) and a temporal-interpolation arrangement (12), said system being characterized in that the output of the motion estimating and compensating arrangement, supplying the information on the group in which the block preceding the current block of the L blocks is finally classified, is coupled to a digitally-assistance channel (7) which ensures the transmission of said group information.

8. A transmission system as claimed in Claim 7, characterized in that the receiving stage includes, arranged in parallel with the link between the spatial post-filtering arrangement and the temporal-interpolation arrangement, a motion estimating arrangement (9) which is also connected to the output of said digitally-assistance channel, said motion estimating arrangement comprising first and second picture stores (91, 92) which are arranged in series at the output of the spatial post-filtering arrangement, a displacement calculating circuit (93) receiving the outputs of each of the two picture stores and intended to supply the three displacement vectors corresponding to, respectively, the first, second and third recursion modes denoted the corrected horizontal recursion, the non-corrected horizontal recursion and the vertical recursion, respectively, and a multiplexer (94) or switching circuit intended to select for each block that one of the displacement vectors which corresponds to the output information of the digitally-assistance channel and to transfer said vector to the temporal interpolation arrangement.

9. A system as claimed in Claim 6, in which said transmission and receiving stages comprise at least a spatial sub-sampling arrangement (2) and a temporal sub-sampling arrangement (3), respectively, and at least a spatial post-filtering arrangement (8) and a temporal interpolation arrangement (12), respectively, said system being characterized in that the output of the motion estimating and compensating arrangement, supplying the information on said displacement vector which is ultimately obtained after decision, is coupled to a digitally-assistance channel (7) which ensures the transmission of said displacement vector information.

10. A transmission system as claimed in Claim 9, characterized in that a coding circuit having for its object to compress the data rate constituting the information to be transmitted is included in the transmission stage between the output of said motion estimating and compensating arrangement and the input of the digitally-assistance channel (7).

11. A transmission system as claimed in any one of Claims 9 and 10, characterized in that, in the receiving stage, the temporal interpolation arrangement (12) receives directly the output information of the digitally-assistance channel, which is consituted by the ultimately obtained displacement vector.

12. A transmission stage for a system as claimed in any one of Claims 6 to 11.

13. A receiving stage for a system as claimed in any one of Claims 6 to 11.

**Patentansprüche**

1. Verfahren zur Bewegungs-Abschätzung und -Kompensation in einer Bildsequenz, bei dem die Helligkeit jedes Bildpunktes digital ausgedrückt wird und wobei jedes Bild in Blöcke zu I x J Punkten zerlegt wird, wobei jeder Block durch zwei Koordinaten (m, n) definiert wird, die den Zeilenrang m angeben, in dem sich der Block befindet, bzw. den Rang des Blocks in dieser m-ten Zeile, wobei der Koordinatenpunkt (m, n) dabei als repräsentativer Punkt des Blocks bezeichnet wird, wobei dieses Verfahren die nachfolgenden Arbeitsschritte beinhaltet:
   (A) Abspeicherung von drei aufeinanderfolgenden Bildern der ursprünglichen Bildsequenz, entsprechend ihrem Rang bezeichnet mit 2k, 2k + 1 und 2k + 2;
   (B) Festlegung von drei Klassen für die Einteilung der Blöcke, in die die Blöcke nach Abschätzung durch korrigierte horizontale Rekursion, nach Abschätzung durch nicht-korrigierte horizontale Rekursion und nach Abschätzung durch vertikale Rekursion eingeteilt werden, wobei die Blöcke einer Verzögerung von L Blöcken im Verlauf der Bildabtastung den genannten Klassen zugeordnet werden durch Untersuchung einer bestimmten Anzahl von möglichen Klassen-Folgen bei den L Blöcken, die auf den aktuellen Block X folgen, wobei der nach der Lageränderung der Blöcke von einem Bild zum nächsten sich ergebende Helligkeitsunterschied zwischen zwei Bildern der Sequenz als Kriterium für die Klasseneinteilung verwendet wird;

14

(C) Erzeugung eines Einteilungsbaumes dessen drei Zweige an jedem Verzweigungspunkt der Gesamtanzahl möglicher Klassen entsprechen und dessen in den aufeinanderfolgenden Ebenen 1 bis L demzufolge notwendigen $3^L$ Zweige den bei L aufeinanderfolgenden Blöcken überhaupt möglichen Klassen-Folgen entsprechen;

(D) Zuordnung von zwei Parametern zu jedem Zweig jeder Ebene:

(a) ein erster Parameter, bezeichnet als Bewegungsvektor, der die eventuelle Lagenänderung des aktuellen Blocks des Bildes $2k+1$ in bezug zum vorhergehenden Bild $2k$ und zum folgenden Bild $2k+2$ darstellt und der für den repräsentativen Punkt des Blocks mittels eines rekursiven Verfahrens zur Abschätzung dieser Lagenänderung berechnet wird;

(b) ein zweiter Parameter, bezeichnet als kumulierte Verzerrung, der die kumulierte Näherungs-Fehlersumme des aktuellen Blocks und aller vorhergehenden Näherungs-Fehlersummen von L Blöcken darstellt, wobei jeder Näherungsfehler dadurch minimiert wird, daß der Einfluß einer abgeschätzten Lagenänderung eines Blocks auf die abgeschätzte Lagenänderung aller folgenden L Blöcke berücksichtigt wird, wobei der genannte Einfluß gegebenenfalls nicht für alle $3^L$ möglichen Zweige des Baumes untersucht wird, sondern nur für M Zweige mit der geringsten kumulierten Verzerrung, die sogenannten "überlebenden" Zweige, wobei M ein oberer Grenzwert ist, der kleiner ist als die maximale Gesamtzahl von $3^L$ Zweigen;

(E) nach Anwendung dieses Verfahrens auf die im Verlauf der Bildabtastung L aufeinanderfolgenden Blöcke wird für den L Blöcke vor dem aktuellen Block liegenden Block eine Mehrheitsentscheidung bezüglich seiner Zuordnung in eine Klasse gefällt, wobei diese Entscheidung anhand einer Untersuchung der überlebenden Zweige getroffen wird, wobei der L Blöcke früher liegende Block dann derjenigen Klasse zugeordnet wird, der die meisten überlebenden Zweige entsprechen und wobei dieses Entscheidungsverfahren in identischer Weise für alle Blöcke wiederholt wird, mit Ausnahme der L letzten Blöcke, für die keine Mehrheitsentscheidungen getroffen werden.

2. Verfahren zur Bewegungs-Abschätzung und -Kompensation gemäß Anspruch 1, dadurch gekennzeichnet, daß es, falls die Anzahl L auf 0 festgesetzt wird, die nachfolgenden Arbeitsschritte enthält:

(A) Abspeicherung von drei aufeinanderfolgenden Bildern der ursprünglichen Bildsequenz, entsprechend ihrem Rang bezeichnet mit $2k$, $2k+1$ und $2k+2$;

(B) Zuordnung von zwei Parametern zu jedem Block:

(a) wobei ein erster Parameter, bezeichnet als Bewegungsvektor, die eventuelle Lagenänderung des aktuellen Blocks des Bildes $2k+1$ in bezug zum vorhergehenden Bild $2k$ und zum folgenden Bild $2k+2$ darstellt und für den repräsentativen Punkt des genannten Blocks berechnet wird;

(b) wobei ein zweiter Parameter, bezeichnet als lokale Verzerrung, repräsentativ ist für den Näherungsfehler des aktuellen Blocks;

(C) Festlegung von drei Klassen für die Einteilung der Blöcke, nach deren Abschätzung durch korrigierte horizontale Rekursion, durch nicht-korrigierte horizontale Rekursion und durch vertikale Rekursion, wobei die Blöcke im Verlauf der Bildabtastung den Klassen durch Untersuchung des genannten Näherungsfehlers dergestalt zugeordnet werden, daß der Näherungsfehler am kleinsten ist;

(D) nach Anwendung dieses Verfahrens und nach Untersuchung der genannten lokalen Verzerrung wird eine Entscheidung über die endgültige Klasseneinteilung des aktuellen Blocks gefällt.

3. Vorrichtung zur Bewegungs-Abschätzung und -Kompensation in einer Bildsequenz, vorgesehen für die Durchführung des Verfahrens gemäß einem der Ansprüche 1 und 2, wobei jedes Bild in Blöcke zerlegt wird, wobei diese Blöcke je nach dem Wert der Helligkeitsdifferenz zwischen zwei Bildern der Sequenz und unter Berücksichtigung der Lagenänderung der Blöcke zwischen zwei Bildern in drei Klassen unterteilt werden, so daß in Klasseneinteilungsbaum erzeugt wird, dessen $3^L$ Zweige auf jeder der Verzweigungsebenen von 1 bis L für L auf den aktuellen Block X folgende Blöcke den möglichen Klassen-Folgen entsprechen, wobei die genannte Vorrichtung folgende Elemente enthält:

(A) einen ersten, einen zweiten und einen dritten Bildspeicher (10, 20, 30) die in Reihe angeordnet sind und der laufenden Speicherung von drei aufeinanderfolgenden Bildern der ursprünglichen Bildsequenz dienen, die gemäß ihrem Rang mit $2k$, $2k+1$ und $2k+2$ bezeichnet werden;

(B) eine rekursive Bewegungs-Abschätzungsschaltung (40), welche die Ausgangssignale des genannten ersten und dritten Bildspeichers empfängt, sowie eine Entscheidungsschaltung mit Verzögerung (50), die einerseits die Ausgangssignale des genannten ersten, zweiten und dritten Bildspeichers empfängt und andererseits die Signale der genannten Absehätzungsschaltung, wobei mittels der rekursiven Absehätzungsschaltung und der Entscheidungsschaltung jedem Zweig jeder Verzweigungsebene einerseits ein Bewegungsvektor zugeordnet wird, der die Lagenänderung des aktuellen Blocks des Bildes 2k + 1 in bezug zum vorhergehenden Bild 2k und zum nachfolgenden Bild 2k + 2 darstellt, und andererseits eine kumulierte Verzerrung, welche die Summe der Näherungsfehler des aktuellen Blocks und aller L vorhergehenden Blöcke darstellt und wobei weiterhin die genannten beiden Schaltungen bei jeder Erweiterung des Klasseneinteilungsbaums die Aktualisierung des Bewegungsvektors erlauben und, auf der Grundlage der genannten Aktualisierung und des Ausgangs der Bildspeicher, eine Information über die Klasse festlegen, in die der dem aktuellen Block um L Blöcke vorausgehende Block eingeteilt wurde, sowie eine Information über den entsprechenden Bewegungsvektor.

4. Vorrichtung gemaß Anspruch 3, dadurch gekennzeichnet, daß die rekursive Bewegungs-Abschätzungsschaltung (40) M identische Stufen (40-A, 40-B, ..., 40-M) enthält, die ihrerseits jeweils eine Zelle (40a) zur Berechnung der neuen Bewegung gemäß einer korrigierten horizontalen Rekursion, sowie eine Zelle (40b) zur Berechnung der neuen Bewegung gemaß einer vertikalen Rekursion enthalten.

5. Vorrichtung gemaß Anspruch 4, dadurch gekennzeichnet, daß die Entscheidungsschaltung mit Verzögerung folgende Mittel enthält:
(A) eine Abschätzungsschaltung (500) für die halbe Summe der Helligkeiten der sich entsprechenden Blöcke X-DEP$_i$ und X + DEP$_i$ in den Bildern 2k bzw. 2k + 2;
(B) am Ausgang der obengenannten Schaltung 2M + 1 parallelgeschaltete Subtrahierer (501(1), 501-(2), ...., 501(M), 502, 50(1), 50(2), ..., 50(M)), die den M Zweigen für korrigierte horizontale Rekursion, dem Zweig für vertikale Rekursion und den M Zweigen für nicht-korrigierte horizontale Rekursion entsprechen, wobei diesen Subtrahierern 2M + 1 Quadrier-Schaltungen in Reihe nachgeschaltet sind;
(C) 3M Addierer, deren Ausgangssignale die kumulierte Verzerrung der Zweige des Klasseneinteilungsbaumes darstellen;
(D) eine Sortier-Schaltung der genannten 3M Ausgangssignale;
(E) eine Speicherschaltung (600) zur Abspeicherung und zur Aktualisierung des Klasseneinteilungsbaums.

6. Bildübertragungssystem mittels eines Übertragungskanals begrenzter Bandbreite, der eine Reduzierung der zu übertragenden Datenmenge erforderlich macht, um sie an die genannte Bandbreite anzupassen, wobei dieses Übertragungssystem mindestens eine Sendestufe und eine Empfangsstufe enthält und wobei diese Sendestufe ihrerseits eine Vorrichtung zur Abschätzung und Kompensation von Bewegungen gemäß einem der Ansprüche 3 bis 5 enthält.

7. System gemaß Anspruch 6 bei dem die genannten Sende- und Empfangsstufen ihrerseits mindestens eine Vorrichtung zum räumlichen Subsampling (2) und eine Vorrichtung zum zeitlichen Subsampling (3), sowie mindestens eine Vorrichtung für die räumliche Nachfilterung (8) und eine Vorrichtung für zeitliche Interpolation enthalten, wobei dieses System dadurch gekenzeichnet ist, daß der Ausgang der Vorrichtung zur Abschätzung und zur Kompensation von Bewegungen mit der Information über die Klasse, in die der dem aktuellen Block um L Blöcke vorhergehende Block tatsächlich eingeteilt wurde, mit einem sog. digitalen Hilfskanal (7) verbunden ist, der diese Klassen-Information seinerseits überträgt.

8. Übertragungssystem gemäß Anspruch 7, dadurch gekennzeichnet, daß die Empfangsstufe, parallel zur Verbindung zwischen den Vorrichtungen für räumliche Nachfilterung und für zeitliche Interpolation, eine Vorrichtung (9) zur Abschätzung der Bewegung enthält, die ebenfalls an den Ausgang des genannten digitalen Hilfskanals angeschlossen ist, wobei diese Bewegungsabschätzungsvorrichtung ihrerseits einen ersten und einen zweiten Bildspeicher (91, 92) enthält, die in Reihe hintereinander an den Ausgang der räumlichen Nachfilter-Vorrichtung angeschlossen sind, eine Schaltung zur Berechnung der Bewegung (93), die die Ausgangssignale aus den beiden Bildspeichern empfängt und die dazu dient, die drei Bewegungsvektoren zu liefern, die der ersten, sog. korrigierten horizontalen Rekursion, der zweiten, sog. nichtkorrigierten horizontalen Rekursion und der dritten, sog. vertikalen Rekursion, entsprechen und weiter einen Multiplexer (94) oder eine Weichenschaltung enthält, die für jeden Block denjenigen Bewegungsvektor auswählt, der der Information am Ausgang des genannten digitalen Hilfskanals entspricht, und die diesen Bewegungsvektor an die Vorrichtung zur zeitlichen Interpolation liefert.

**9.** Übertragungssystem gemäß Anspruch 6 bei dem die genannten Sende- und Empfangsstufen je mindestens eine Vorrichtung zum räumlichen Subsampling (2), eine Vorrichtung zum zeitlichen Subsampling (3), und mindestens eine Vorrichtung zur räumlichen Nachfilterung (8) sowie eine Vorrichtung zur zeitlichen Interpolation (12) enthalten, dadurch gekennzeichnet, daß der Ausgang der Vorrichtung zur Bewegungsabschätzung und -Kompensation, an dem die Information zum letztendlich ausgewählten Bewegungsvektor vorliegt, mit einem sog. digitalen Hilfsksanal (7) verbunden ist, der seinerseits diese Bewegungsvektor-Information überträgt.

**10.** Übertragungssystem gemäß Anspruch 9, dadurch gekennzeichnet, daß in die Sendestufe zwecks Reduzierung der zu übertragenden Datenmenge eine Codier-Schaltung zwischen den Ausgang der genannten Vorrichtung zur Bewegungsabschätzung und -Kompensation und den Eingang des digitalen Hilfskanals (7) eingefügt ist.

**11.** Übertragungssystem gemäß einem der Ansprüche 9 und 10, dadurch gekennzeichnet, daß in der Empfangsstufe die Vorrichtung für zeitliche Interpolation (12) die Information am Ausgang des digitalen Hilfskanals, die dem letztendlich ausgewählten Bewegungsvektor entspricht, direkt erhält.

**12.** Sendestufe für ein Übertragungssystem gemäß einem der Ansprüche 6 bis 11

**13.** Empfangsstufe für ein Übertragungssystem gemäß einem der Ansprüche 6 bis 11.

FIG. 1a

FIG. 1b

FIG. 5

# FIG. 2

FIG. 3

P$_3$
•

X_DEP$_i$

P$_1$ •           •           • P$_2$

•
P$_4$

FIG. 4

FIG. 6

FIG. 7